(19) **Europäisches Patentamt / European Patent Office / Office européen des brevets**

(11) **EP 2 624 340 B1**

(12) **EUROPEAN PATENT SPECIFICATION**

(45) Date of publication and mention of the grant of the patent:
**05.11.2014 Bulletin 2014/45**

(51) Int Cl.:
*H01M 4/134* (2010.01)    *B22D 11/06* (2006.01)
*H01M 4/1395* (2010.01)    *H01M 4/38* (2006.01)
*H01M 10/0525* (2010.01)    *H01B 1/02* (2006.01)
*B82Y 30/00* (2011.01)    *C22C 28/00* (2006.01)
*H01M 4/04* (2006.01)

(21) Application number: **12194299.9**

(22) Date of filing: **26.11.2012**

(54) **Negative active material, method of preparing the same, negative electrode for lithium secondary battery including negative active material, and lithium secondary battery including negative electrode**

Negativaktivmaterial, Verfahren zur Herstellung davon, negative Elektrode für Lithiumsekundärbatterie mit dem Negativaktivmaterial und Lithiumsekundärbatterie mit der negativen Elektrode

Matériau actif négatif, son procédé de préparation, électrode négative pour batterie secondaire au lithium comprenant un matériau actif négatif et batterie secondaire au lithium comprenant une électrode négative

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.02.2012 US 201261593769 P**

(43) Date of publication of application:
**07.08.2013 Bulletin 2013/32**

(73) Proprietor: **Samsung SDI Co., Ltd.**
**Yongin-si, Gyeonggi-do (KR)**

(72) Inventors:
 • **Kwon, Seung-Uk**
  **Chungcheongnam-do 331-300 (KR)**
 • **Lee, Chun-Gyoo**
  **Chungcheongnam-do 331-300 (KR)**
 • **Kim, Jae-Hyuk**
  **Chungcheongnam-do 331-300 (KR)**
 • **Moon, Sung-Hwan**
  **Chungcheongnam-do 331-300 (KR)**
 • **Suh, Soon-Sung**
  **Chungcheongnam-do 331-300 (KR)**
 • **Matulevich, Yuri**
  **Chungcheongnam-do 331-300 (KR)**
 • **Jeong, Chang-Ui**
  **Chungcheongnam-do 331-300 (KR)**
 • **Choi, Jong-Seo**
  **Chungcheongnam-do 331-300 (KR)**
 • **Park, Yo-Han**
  **Chungcheongnam-do 331-300 (KR)**

(74) Representative: **Mounteney, Simon James**
**Marks & Clerk LLP**
**90 Long Acre**
**London**
**WC2E 9RA (GB)**

(56) References cited:
**US-A1- 2003 134 198    US-A1- 2005 031 957**
**US-A1- 2007 128 517**

**Description**

[Technical Field]

One or more embodiments of the present invention relate to negative active materials, methods of preparing the same, negative electrodes for lithium secondary batteries that include the negative active materials, and lithium secondary batteries including the negative electrode, and more particularly, to negative active materials with improved initial discharge capacity and cycle characteristics, methods of preparing the same, negative electrodes for lithium secondary batteries that include the negative active materials, and lithium secondary batteries including the negative electrode.

[Prior Art]

Lithium secondary batteries used in portable electronic devices for information communication, such as personal digital assistances (PDAs), mobile phones, or notebook computers, electric bicycles, electronic vehicles, etc. have a discharge voltage that is at least two times greater that of conventional batteries and thus exhibit high energy density.

A lithium secondary battery includes a positive electrode, a negative electrode, and either an organic electrolytic solution or a polymer electrolyte filling a space between the positive and negative electrodes, wherein the positive and negative electrodes each include an active material that allows lithium ions to be intercalated and deintercalated. In this structure, when lithium ions are intercalated and deintercalated between the positive and negative electrodes, oxidation and reduction reactions occur, and thus, electrical energy is generated.

Positive active materials of lithium secondary batteries may be oxides of lithium and a transition metal that allow intercalation of lithium ions, such as a lithium cobalt oxide ($LiCoO_2$), a lithium nickel oxide ($LiNiO_2$), and a lithium nickel cobalt manganese oxide (e.g., $Li[NiCoMn]O_2$, $Li[Ni_{1-x-y}Co_xM_y]O_2$).

For use as negative active materials, research into negative active materials that allow intercalation and deintercalation of lithium ions, such as various types of carbonaceous materials including artificial and natural graphite and hard carbon, and non-carbonaceous materials such as Si, has been conducted.

However, non-carbonaceous materials such as Si repeatedly undergo volumetric expansion and contraction during intercalation and deintercalation of lithium ions, and thus, as a result, a negative electrode including such a non-carbonaceous material has an unstable structure and deteriorated cycle characteristics. To address these problems, research into Si-based alloys has been conducted.

Si-based alloys may be, for example, a Si-Ti-Ni alloy. The Si-Ti-Ni alloy comprises a matrix phase of $Si_7Ti_4Ni_4$ in the alloy: an atom percent (at%) ratio of Si to Ti to Ni is 7:4:4. However, such a matrix phase in the alloy contains a relatively large amount of Si, and thus a large amount of Si is consumed in an inactive phase in which Si does not react with lithium, and raw material costs for the Si-Ti-Ni alloys are high.

US2007/0128517, US2005/0031957 and US2003/0134198 all disclose silicon-based alloys that may be used as the active material for negative electrodes.

Therefore, there is still a need to develop a negative active material including a Si-based alloy consisting of novel compositions which improves cycle characteristics of a negative electrode including the Si-based alloy with reducing costs of the negative active material and a lithium secondary battery including the negative electrode, and a method of preparing the negative active material.

[Disclosure of the Invention]

[Technical Goal of the Invention]

One or more embodiments of the present invention include negative active materials with improved initial discharge capacity and cycle characteristics.

One or more embodiments of the present invention include methods of preparing the negative active materials.

One or more embodiments of the present invention include negative electrodes for lithium secondary batteries which include the negative active materials.

One or more embodiments of the present invention include lithium secondary batteries including the negative electrodes.

[Means for Achieving Technical Goal]

Additional aspects will be set forth in part in the description which follows and, in part, will be apparent from the description, or may be learned by practice of the presented embodiments.

The present invention provides a negative electrode active material comprising a silicon-metal alloy having the composition xSi-yAl-zFe wherein 50at%≤x≤90at%, 5at%≤y≤30at%, 5at%≤z≤30at%, and x+y+z=100 at%, and y is equal to or greater than z, the alloy comprises a first Si-Al-Fe phase with an at% ratio of 3:3:2 and the alloy comprises a Si phase, wherein the x-ray diffraction pattern for the first Si-Al-Fe phase has a peak present at a Bragg angle 2θ of 24.6 ± 0.2 degrees 2θ, 44.7± 0.2 degrees 26 or 47.0 ± 0.2 degrees 2θ.

According to one or more embodiments of the present invention, a negative active material includes a Si-Al-Fe alloy represented by Formula 1 below, wherein the Si-Al-Fe alloy includes a portion where a Si phase and a phase in which an atom percent (at%) ratio of Si to Al to Fe is 3:3:2 in the alloy are dispersed:

<Formula 1>

xSi-yAl-zFe

wherein 50at%≤x≤90at%, 5at%≤y≤30at%, 5at%≤z≤30at%, and x+y+z=100 at%.

The Si-Al-Fe alloy used in the present invention preferably includes a portion where the Si phase and the phase in which an atom percent (at%) ratio of Si to Al to Fe is 3:3:2 in the alloy are uniformly dispersed.

The at% ratio of Si in the first Si-Al-Fe phase to Si in the Si phase is between 1:0.5 and 1:12, optionally between 1:1.0 and 1:10.0, optionally between 1:1.3 and 1:7.5, optionally between 1:1.5 and 1:3.5, optionally between 1:1.75 and 1:3 and optionally between 1:2.0 and 1:2.75.

The phase in which an atom percent (at%) ratio of Si to Al to Fe is 3:3:2 in the alloy may preferably be a matrix phase.

The Si phase in the alloy may consist of Si active particles.

The Si active particles may preferably have an average particle size of from 10 to 200 nm.

The elements Si, Al, and Fe of the negative active material may preferably be doped with at least one transition metal selected from the group consisting of Ni, Co, Cu, Cr, Zr, Ti, Mn, V, and Zn.

An atom percent (at%) of the doped transition metal with respect to the elements Si, Al, and Fe may be from 0.1 at% to 5 at% with respect to the whole alloy.

According to one or more embodiments of the present invention, a method of preparing a negative active material includes preparing a parent alloy consisting of a Si-Al-Fe alloy as discussed above; preparing an alloy ribbon by cooling the parent alloy; and pulverizing the alloy ribbon to prepare alloy powder.

The preparing of the parent alloy may preferably be performed by vacuum induction melting (VIM), arc melting, or mechanical alloying.

The preparing of the alloy ribbon may preferably include quenching the parent alloy at a rate of from $10^3$ K/sec to $10^9$ K/sec, preferably $10^3$ K/sec to $10^7$ K/sec.

The quenching may preferably be performed using a melt spinner or by gas atomization.

The alloy ribbon or the alloy powder may preferably include a portion where a Si phase and a phase in which an atom percent (at%) ratio of Si to Al to Fe is 3:3:2 are dispersed.

The alloy ribbon or the alloy powder may preferably include a portion where the Si phase and the phase in which an atom percent (at%) ratio of Si to Al to Fe is 3:3:2 are uniformly dispersed.

A mixing ratio of the Si phase to the phase in which an atom percent (at%) ratio of Si to Al to Fe is 3:3:2 in the alloy may be in a range of 32:1 to 2:1.

The phase in which an atom percent (at%) ratio of Si to Al to Fe is 3:3:2 in the alloy ribbon or the alloy powder may preferably be a matrix phase.The Si phase in the Si-Al-Fe alloy may preferably consist of Si active metal particles.

The Si active particles may preferably have an average particle size of from 10 to 200 nm.

The alloy powder may have a D50 of from 0.1 to 10 μm.

According to one or more embodiments of the present invention, a negative electrode for a lithium secondary battery is provided that includes the negative active material.

According to one or more embodiments of the present invention, a lithium secondary battery is provided that includes the negative electrode.

[Brief Description of the Drawings]

FIG. 1 is a graph illustrating X-ray diffraction (XRD) analysis results of a negative active material consisting of an alloy of Si, Al, and Fe, prepared according to Example 1.
FIG. 2 is a graph illustrating XRD analysis results of a negative active material consisting of an alloy of Si, Al, and Fe, prepared according to Example 2.

FIG. 3 is a graph illustrating XRD analysis results of a negative active material consisting of an alloy of Si, Ti, and Ni, prepared according to Comparative Example 1.

FIG. 4 is a graph illustrating XRD analysis results of a negative active material consisting of an alloy of Si, Al, and Fe, prepared according to Comparative Example 2.

FIG. 5 is a graph showing a particle size distribution of a negative active material according to Example 1.

FIG. 6 is an exploded perspective view illustrating a lithium secondary battery according to an embodiment of the present invention.

FIG. 7 is a graph showing initial charge/discharge efficiencies of lithium secondary batteries manufactured according to Examples 3 and 4 and Comparative Examples 3 and 4.

FIG. 8 is a graph showing cycle characteristics of lithium secondary batteries of Examples 3 and 4 and Comparative Examples 3 and 4.

[Description of Embodiment]

Hereinafter, one or more embodiments of a negative active material, a method of preparing the same, a negative electrode for a lithium secondary battery that includes the negative active material, and a lithium secondary battery including the negative electrode will be described in detail with reference to the accompanying drawings. However, these embodiments are provided only for illustrative purposes and are not intended to limit the scope of the present invention.

The present invention provides a negative electrode active material comprising a silicon-metal alloy having the composition xSi-yAl-zFe wherein $50at\% \leq x \leq 90at\%$, $5at\% \leq y \leq 30at\%$, $5at\% \leq z \leq 30at\%$, and x+y+z=100 at%, and y is equal to or greater than z

the alloy comprises a first Si-Al-Fe phase with an at% ratio of 3:3:2 and

the alloy comprises a Si phase, wherein the x-ray diffraction pattern for the first Si-Al-Fe phase has a peak present at a Bragg angle $2\theta$ of $24.6 \pm 0.2$ degrees $2\theta$, $44.7 \pm 0.2$ degrees $2\theta$ or $47.0 \pm 0.2$ degrees $2\theta$.

According to an embodiment of the present invention, there is provided a negative active material including a Si-Al-Fe alloy represented by Formula 1 below, wherein the Si-Al-Fe alloy includes a portion where a Si phase and a phase in which an atom percent (at%) ratio of Si to Al to Fe is 3:3:2 in the alloy are dispersed:

<Formula 1>

$$xSi\text{-}yAl\text{-}zFe$$

wherein $50at\% \leq x \leq 90at\%$, $5at\% \leq y \leq 30at\%$, $5at\% \leq z \leq 30at\%$, and x+y+z=100 at%.

In the Si-Al-Fe alloy, an atom percent of Si may satisfy the condition: $50at\% \leq x \leq 90at\%$, optionally $60at\% \leq x \leq 90at\%$, optionally $62at\% \leq x \leq 85at\%$, optionally $64at\% \leq x \leq 80at\%$ and optionally $65at\% \leq x \leq 75at\%$, for example, $65at\% \leq x \leq 90at\%$. The atom percent of Al may satisfy the condition: $5at\% \leq y \leq 30at\%$, for example, $5at\% \leq y \leq 25at\%$, optionally $10at\% \leq y \leq 23at\%$, and optionally $15at\% \leq y \leq 22at\%$, for example, $5at\% \leq y \leq 20at\%$. The atom percent of Fe may satisfy the condition: $5at\% \leq z \leq 30at\%$, optionally $5at\% \leq z \leq 25at\%$, optionally $10at\% \leq z \leq 20at\%$, and optionally $12at\% \leq z \leq 18at\%$, for example, $5at\% \leq z \leq 20at\%$.

In the negative active material, the Si-Al-Fe alloy may include a portion where an active Si phase capable of reversibly reacting with lithium ions and an inactive phase that does not react with lithium ions, i.e., a phase in which an atom percent (at%) ratio of Si to Al to Fe is 3:3:2 are dispersed.

The negative active material contains 50 to 90at% of Si, and thus a lithium secondary battery with high capacity may be obtained. In addition, the negative active material has an inactive phase that does not react with lithium ions, i.e., a phase in which an atom percent (at%) ratio of Si to Al to Fe is 3:3:2, and thus destruction of a lithium secondary battery by stress due to a volumetric change of Si during charging and discharging cycles may be prevented, whereby a lithium secondary battery including the negative active material has an improved cycle characteristic.

The Si-Al-Fe alloy may include a portion where the Si phase and the phase in which an atom percent (at%) ratio of Si to Al to Fe is 3:3:2 in the alloy are uniformly dispersed. The Si-Al-Fe alloy is formed as an alloy with uniform compositions by including the portion where the Si phase and the phase in which an atom percent (at%) ratio of Si to Al to Fe is 3:3:2 in the alloy are uniformly dispersed, and thus a lithium secondary battery including the negative active material may have an improved charge and discharge cycle characteristic.

An at% ratio of the Si phase to the phase in which an atom percent (at%) ratio of Si to Al to Fe is 3:3:2 based on a ratio of Si ratio of 3 in the tri-elemental phase (e.g. a Si phase containing 60at% Si and a Si:Al:Fe phase containing 15at% Si would have a ratio of 60:5) in the alloy may be in the range of 32:1 to 2:1, for example, 15:1 to 3:1, for example, 8:1 to 4:1.

In a further embodiment, the at% ratio of Si in the first Si-Al-Fe phase to Si in the Si phase (e.g. a Si phase containing 60at% Si and a Si:Al:Fe phase containing 15at% Si would have a ratio of 1:4) is between 1:0.5 and 1:12, optionally between 1:1.0 and1:10.0, optionally between 1:1.3 and 1:7.5, optionally between 1:1.5 and 1:3.5, optionally between 1:1.75 and 1:3 and optionally between 1:2.0 and 1:2.75.

In a further embodiment the amount of Si present in the first Si-Al-Fe phase is preferably between 10at% and 35at%, optionally 12at% and 30at%, and optionally 15at% and 25at%.

In a further embodiment the amount of Si present in the Si phase is preferably between 25at% and 60at%, optionally 30at% and 52at%, and optionally 40at% and 45at%.

When the mixing ratio of the Si phase to the phase in which an atom percent (at%) ratio of Si to Al to Fe in the alloy is 3:3:2 is within the range described above, an active Si phase capable of reversibly reacting with lithium ions and an inactive phase that does not react with lithium ions are appropriately mixed, and thus, a lithium secondary battery including the negative active material may have an improved capacity and cycle characteristic.

The phase in which an atom percent (at%) ratio of Si to Al to Fe is 3:3:2 in the alloy may be formed as a matrix phase. The matrix phase does not react with lithium ions and thus acts as a buffer to the volumetric change of Si during charging and discharging cycles, thereby improving electron conductivity between Si phases and cycle characteristics of a lithium secondary battery.

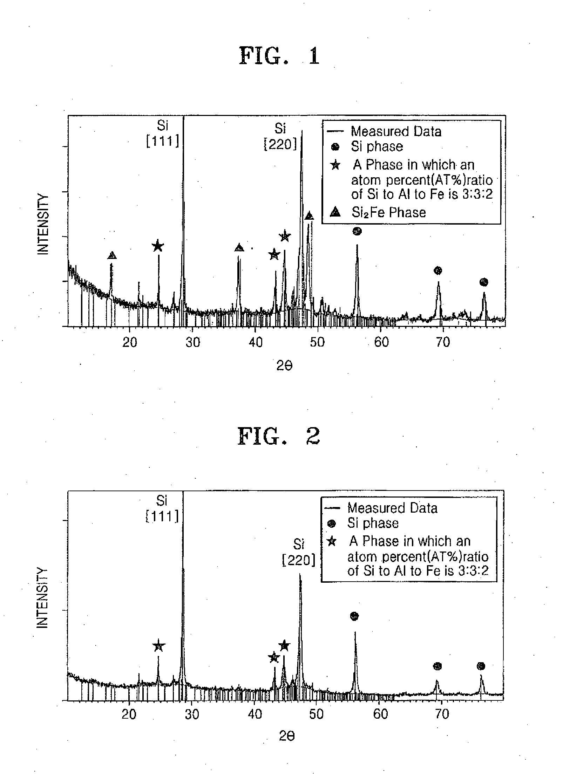

A peak of the phase in which an atom percent (at%) ratio of Si to Al to Fe is 3:3:2 in the alloy is present at a Bragg angle 2θ of at least one of 24.6 ± 0.2 degrees 2θ, 44.7± 0.2 degrees 2θ or 47.0 ± 0.2 degrees 2θ. Preferably, the x-ray diffraction pattern shows peaks at any two or more of, preferably all of, 24.6 ± 0.2 degrees 2θ, 44.7± 0.2 degrees 2θ and 47.0 ± 0.2 degrees 2θ. The peak of the phase in which an atom percent (at%) ratio of Si to Al to Fe is 3:3:2 in the alloy and the Bragg angle 2θ with respect to a CuK-alpha characteristic X-ray wavelength of 1.541 Angstroms may be confirmed by FIGS. 1 and 2 which will be described below.

The Si phase in the alloy preferably may consist of Si active particles.

The Si active particles may preferably have an average particle size of from 10 to 200 nm, optionally from 20 to 150 nm, optionally from 30 to 100 nm, optionally from 35 to 75 nm, for example, from 10 to 150 nm, for example, from 10 to 100 nm. The average particle size of the Si active metal particles may be obtained by Scherrer's equation by using the full width at half maximum (FWHM) of the peak with respect to a Si(111) plane in X-ray diffraction spectrum using a CuK-alpha characteristic X-ray wavelength of 1.541 Angstroms. The peak of the Si(111) plane, a Bragg angle 2θ measured from the peak, and the full width at half maximum may be confirmed by FIGS. 1 and 2 which will be described below.

When the average particle size of the Si active metal particles in the Si-Al-Fe alloy is within the range described above, a negative active material including the Si-Al-Fe alloy with a constant thickness is formed and thus may easily respond to volumetric changes during charging and discharging cycles.

The Si-Al-Fe alloy may optionally further include a phase in which an atom percent (at%) ratio of Al to Fe is 1 or more but preferably does not have an at% ratio of 3:3:2. For example, the atom percent (at%) ratio of Al to Fe in the alloy may be in the range of 1 to 9, for example, 1 to 5. The phase in which an atom percent (at%) ratio of Al to Fe is 1 or more may be, for example, at least one of $Al_8Fe_2Si$, $Al_{167.8}Fe_{44.9}Si_{23.9}$ and $Al_{4.5}FeSi$, but does not include $Al_5FeSi$, $Al_3FeSi$, and $Al_9FeSi_3$.

When the negative active material further includes the phase in which an atom percent (at%) ratio of Al to Fe is 1 or more, an atom percent (at%) of the remaining Fe is decreased, so that a phase that does not react with lithium ions, such as a $FeSi_2$ phase, is not formed. Therefore, a negative active material with high capacity may be obtained.

In the negative active material, the elements Si, Al, and Fe may preferably be doped with at least one transition metal independently selected from the group consisting of Ni, Co, Cu, Cr, Zr, Ti, Mn, V, and Zn. For example, the elements Si, Al, and Fe may be doped with at least one transition metal selected from the group consisting of Ni, Co, Zr, and Mn.

An atom percent (at%) ratio of the transition metal to each of the elements Si, Al, and Fe of the negative active material may preferably be in the range of 0.1 at% to 5at%, for example, 0.5at% to 2at% with respect to the whole alloy.

The negative active material doped with the transition metals and/or the negative active material having an atom percent (at%) within the range described above may exhibit high capacity and have an improved cycle and lifetime characteristic.

According to another embodiment of the present invention, a method of preparing a negative active material described above includes comprising the steps of:

melting Si, Al and Fe to prepare a parent alloy,
quenching the parent alloy to form an alloy ribbon and,
optionally pulverizing the alloy ribbon.

In the method of preparing a negative active material, first, a parent alloy including the Si-Al-Fe alloy represented by Formula 1 above is prepared.

The preparing of the parent alloy may be performed by vacuum induction melting (VIM), arc melting, or mechanical alloying. In particular, to prevent oxidation by air, the preparing of the parent alloy may be performed by VIM in which the parent alloy is melted in vacuum. However, the preparation method of the parent alloy is not limited to the above examples, and any method of preparing a parent alloy that is known in the art may be used.

Next, an alloy ribbon is prepared by quenching the parent alloy.

The preparing of the alloy ribbon may include quenching at a rate of $10^3$ K/sec to $10^9$ K/sec, for example, $10^3$ K/sec to $10^7$ K/sec, optionally $10^5$ K/sec to $10^7$ K/sec. When the rate of the quenching process is within the range described above, phases included in the alloy ribbon or the alloy powder may be appropriately and uniformly dispersed.

The quenching process may preferably be performed using a melt spinner or by gas atomization. In particular, the quenching process may preferably be performed using a melt spinner.

However, the quenching method is not limited to the above examples. For example, the quenching method may be any quenching process used in a method of preparing an alloy ribbon which is known in the art, such as a single roll melt spinning process in which a melt alloy is sprayed to a single roll, a twin roll melt spinning process in which a melt alloy is sprayed to twin rolls, gas-water atomization in which a melt alloy is sprayed to water, or centrifugal atomization using a centrifugal force in which a revolving alloy electrode material is melted and evaporated by spark discharge and then quenched and solidified.

The alloy ribbon is preferably pulverized by mechanical milling, for example, ball-milling.

The alloy powder may have a D50 in the range of 0.1 to 10 $\mu$m, for example, 0.2 to 10 $\mu$m, for example, 0.3 to 10 $\mu$m, for example 1 $\mu$m to 6 $\mu$m, for example 2 $\mu$m to 5 $\mu$m. The D50 indicates a median in particle size distribution. It is the pulverizing step that affords this particle distribution. Means of preparing a particle distribution within this range are well known in the art.

When the D50 of the alloy powder is within the range described above, the alloy powder may be easily used to prepare a polar plate, and alloy powder particles do not agglomerate with each other, whereby a lithium secondary battery including the negative active material may have an improved cycle characteristic.

According to another embodiment of the present invention, a negative electrode for a lithium secondary battery includes the negative active material described above.

According to another embodiment of the present invention, a lithium secondary battery includes the negative electrode. The lithium secondary battery including the negative electrode may have an improved initial discharge capacity and cycle characteristic.

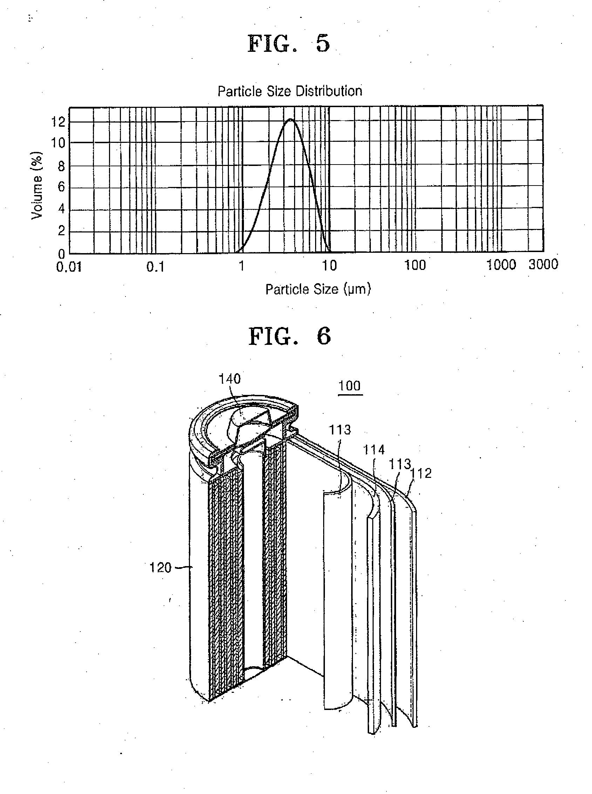

FIG. 6 is an exploded perspective view illustrating a lithium secondary battery 100 according to an embodiment of the present invention. Referring to FIG. 6, the lithium secondary battery 100 includes a positive electrode 114, a negative electrode 112, a separator 113 interposed between the positive electrode 114 and the negative electrode 112, an electrolyte (not shown) with which the negative electrode 112, the positive electrode 114, and the separator 113 are impregnated, a battery container 120, and an encapsulation member 140 for encapsulating the battery container 120. The negative electrode 112, the positive electrode 114, and the separator 113 are sequentially deposited and then wound in a spiral form and then, the wound structure is placed in the battery container 120, thereby manufacturing the lithium secondary battery 100.

The positive electrode 114 includes a current collector and a positive active material layer disposed on the current collector. An example of a positive active material that is used to form the positive active material layer is a compound that allows lithium to be reversibly intercalated and deintercalated, that is, a lithiumated intercalation compound. In particular, the positive active material may be a compound represented by any one of the following formulae: $Li_aA_{1-b}X_bD_2$ where $0.95 \leq a \leq 1.1$ and $0 \leq b \leq 0.5$; $Li_aE_{1-b}X_bO_{2-c}D_c$ where $0.95 \leq a \leq 1.1$, $0 \leq b \leq 0.5$, and $0 \leq c \leq 0.05$; $LiE_{2-b}X_bO_{4-c}D_c$ where $0 \leq b \leq 0.5$ and $0 \leq c \leq 0.05$; $Li_aNi_{1-b-c}Co_bBcD_\alpha$ where $0.95 \leq a \leq 1.1$, $0 \leq b \leq 0.5$, $0 \leq c \leq 0.05$, and $0 < \alpha \leq 2$; $Li_aNi_{1-b-c}Co_bX_cO_{2-\alpha}M_\alpha$ where $0.95 \leq a \leq 1.1$, $0 \leq b \leq 0.5$, $0 \leq c \leq 0.05$, and $0 < \alpha < 2$; $Li_aNi_{1-b-c}Co_bX_cO_{2-\alpha}M_2$ where $0.95 \leq a \leq 1.1$, $0 \leq b \leq 0.5$, $0 \leq c \leq 0.05$, and $0 < \alpha < 2$; $Li_aNi_{1-b-c}Mn_bX_cD_\alpha$ where $0.95 \leq a \leq 1.1$, $0 \leq b \leq 0.5$, $0 \leq c \leq 0.05$, and $0 < \alpha \leq 2$; $Li_aNi_{1-b-c}Mn_bX_cO_{2-\alpha}M_\alpha$ where $0.95 \leq a \leq 1.1$, $0 \leq b \leq 0.5$, $0 \leq c \leq 0.05$, and $0 < \alpha < 2$; $Li_aNi_{1-b-c}Mn_bX_cO_{2-\alpha}M_2$ where $0.95 \leq a \leq 1.1$, $0 \leq b \leq 0.5$, $0 \leq c \leq 0.05$, and $0 < \alpha < 2$; $Li_aNi_bE_cG_dO_2$ where $0.90 \leq a \leq 1.1$, $0 \leq b \leq 0.9$, $0 \leq c \leq 0.5$, and $0.001 \leq d \leq 0.1$; $Li_aNi_bCo_cMn_dG_eO_2$ where $0.90 \leq a \leq 1.1$, $0 \leq b \leq 0.9$, $0 \leq c \leq 0.5$, $0 \leq d \leq 0.5$, and $0 \leq e \leq 0.1$; $Li_aNiG_bO_2$ where $0.90 \leq a \leq 1.1$ and $0.001 \leq b \leq 0.1$; $Li_aCoG_bO_2$ where $0.90 \leq a \leq 1.1$ and $0.001 \leq b \leq 0.1$; $Li_aMnG_bO_2$ where $0.90 \leq a \leq 1.1$ and $0.001 \leq b \leq 0.1$; $Li_aMn_2G_bO_4$ where $0.90 \leq a \leq 1.1$ and $0 \leq b \leq 0.1$; $LiQO_2$; $LiQS_2$; $LiV_2O_5$; $LiZO_2$; $LiNiVO_4$; $Li_{(3-f)}J_2(PO_4)_3$ where $0 \leq f \leq 2$; $Li_{(3-f)}Fe_2(PO_4)_3$ where $0 \leq f \leq 2$; $LiFePO_4$ ; and lithium titanate.

In these chemical formulae, A is selected from the group consisting of Ni, Co, Mn, and a combination thereof, but is not limited thereto; X is selected from the group consisting of Al, Ni, Co, Mn, Cr, Fe, Mg, Sr, V, rare earth elements, and a combination thereof, but is not limited thereto; D is selected from the group consisting of O, F, S, P, and a combination thereof, but is not limited thereto; E is selected from the group consisting of Co, Mn, and a combination thereof, but is not limited thereto; M is selected from the group consisting of F, S, P, and a combination thereof, but is not limited thereto; G is selected from the group consisting of Al, Cr, Mn, Fe, Mg, La, Ce, Sr, V, and a combination thereof, but is not limited thereto; Q is selected from the group consisting of Ti, Mo, Mn, and a combination thereof, but is not limited thereto; Z is selected from the group consisting of Cr, V, Fe, Sc, Y, and a combination thereof, but is not limited thereto; and J is selected from the group consisting of V, Cr, Mn, Co, Ni, Cu, and a combination thereof, but are not limited thereto. For example, the positive active material may be lithium titanate.

The lithium titanate may be divided into, according to a crystal structure, a spinel type lithium titanate, an anatase type lithium titanate, and a ramsdellite type lithium titanate.

In particular, the positive active material may be represented by $Li_{4-x}Ti_5O_{12}$ where $0 \leq x \leq 3$. For example, the positive active material may be $Li_4Ti_5O_{12}$, but is not limited thereto.

Also, the positive active material may be $Li_aNi_bCo_cMn_dG_eO_2$ where $0.90 \leq a \leq 1.1, 0 \leq b \leq 0.9, 0 \leq c \leq 0.5, 0 \leq d \leq 0.5$, and $e = 0$, for example, $a = 1$, $b = 0.5$, $c = 0.2$, $d = 0.3$, and $e = 0$, or $LiMn_2O_4$, but is not limited thereto.

A lithium electrode may be used as the positive electrode 114.

The compounds used as a positive active material may further have a coating layer at their surfaces. Alternatively, the compounds may be used in combination with a compound including a coating layer. The coating layer may include at least one coating element compound selected from the group consisting of an oxide of a coating element, a hydroxide of a coating element, an oxyhydroxide of a coating element, an oxycarbonate of a coating element, and a hydroxy carbonate of a coating element. The coating element compounds may be amorphous or crystalline. The coating element included in the coating layer may be Mg, Al, Co, K, Na, Ca, Si, Ti, V, Sn, Ge, Ga, B, As, Zr, or mixtures thereof.

A coating layer may be formed by using the coating elements in the aforementioned compounds by using any one of various methods that do not adversely affect physical properties of a positive active material (e.g., spray coating or immersion). The coating layer formation methods may be obvious to one of ordinary skill in the art and thus, will not be described in detail.

The positive active material layer may further include a binder.

The binder may allow positive active material particles to be adhered to each other and the positive active material to be attached to the current collector. Examples of the binder include, but are not limited to, polyamide imide, polyvinylalcohol, carboxymethylcellulose, hydroxypropylcellulose, diacetylcellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, acrylated styrene-butadiene rubber, an epoxy resin, and nylon.

The current collector may be an Al current collector, but is not limited thereto.

To prepare the positive electrode, a positive active material and a binder (selectively, including a conductive material) are mixed in a solvent to prepare a composition for forming a positive active material layer, and the composition is applied to a current collector. Since the method of manufacturing the positive electrode is well known in the art, the method will not be described in detail in the present specification. The solvent may be N-methylpyrrolidone, but is not limited thereto.

The positive active material layer may further include a conductive agent. The conductive agent may be at least one selected from the group consisting of carbon black, ketjen black, acetylene black, artificial graphite, natural graphite, copper powder, nickel powder, aluminum powder, silver powder, and polyphenylene, but is not limited thereto.

The amount of each of the binder and the conductive agent may be in the range of 2 to 5 parts by weight based on 100 parts by weight of the positive active material. The amount of the solvent may be in the range of 1 to 10 parts by weight based on 100 parts by weight of the positive active material. When the amounts of the binder, the conductive agent, and the solvent in the positive active material layer are within the ranges described above, the positive active material layer is easily formed.

The negative electrode 112 may preferably include a current collector and a negative active material layer disposed on the current collector. A negative active material for forming the negative active material layer is as described above.

The negative active material contains 50 to 90at% of Si, and thus a lithium secondary battery with high capacity may be obtained. In addition, the negative active material has an inactive phase that does not react with lithium ions, i.e., a phase in which an atom percent (at%) ratio of Si to Al to Fe is 3:3:2, and thus destruction of a lithium secondary battery by stress due to a volumetric change of Si during charging and discharging cycles may be prevented, whereby a lithium secondary battery including the negative active material has an improved cycle characteristic.

The negative active material layer may preferably further include a binder. The binder may be the same binder as that used in the positive electrode.

The current collector of the negative electrode 112 may be a Cu current collector, but is not limited thereto. For example, the current collector may be formed of stainless steel, aluminum, nickel, titan, heat-treated carbon, copper, stainless steel that is surface-treated with carbon, nickel, titan, or silver, or an Al-Cd alloy. In addition, as in the current collector of the positive electrode 114, the current collector of the negative electrode 112 may have fine unevenness on its surface so as to increase an adhesive strength of the current collector to the negative active material, and may be used in any one of various forms including films, sheets, foils, nets, porous structures, foams, and non-woven fabrics.

The negative active material layer may selectively include a conductive agent. The conductive agent may be the same conductive material as that used in the positive electrode.

To prepare the negative electrode 112, a negative active material and a binder (selectively, including a conductive material) are mixed in a solvent to prepare a composition for forming a negative active material layer, and the composition is applied to a current collector. Since the method of manufacturing the negative electrode is well known in the art, the method will not be described in detail in the present specification. The solvent may be N-methylpyrrolidone, but is not limited thereto.

The amount of each of the binder and the conductive agent may preferably be in the range of 2 to 5 parts by weight based on 100 parts by weight of the negative active material. The amount of the solvent may preferably be in the range of 1 to 10 parts by weight based on 100 parts by weight of the negative active material. When the amounts of the binder, the conductive agent, and the solvent in the negative active material layer are within the ranges described above, the negative active material layer is easily formed.

If desired, the composition for forming the positive active material layer and the composition for forming the negative active material layer may further include a plasticizer to form pores in an electrode plate.

The electrolytic solution includes a non-aqueous organic solvent and a lithium salt.

The non-aqueous organic solvent may act as a medium through which ions involved in an electrochemical reaction of the lithium battery may be transported.

The non-aqueous organic solvent may be a carbonate-based solvent, an ester-based solvent, an ether-based solvent, a ketone-based solvent, an alcohol-based solvent, or an aprotic solvent. Examples of the carbonate-based solvent include dimethyl carbonate (DMC), diethyl carbonate (DEC), dipropyl carbonate (DPC), methylpropyl carbonate (MPC), ethyl propyl carbonate (EPC), ethyl methyl carbonate (EMC), ethylene carbonate (EC), propylene carbonate (PC), and butylene carbonate (BC). Examples of the ester-based solvent include methyl acetate, ethyl acetate, n-propyl acetate, dimethylacetate, methyl propionate, ethyl propionate, y-butyrolactone, decanolide, valerolactone, mevalonolactone, and caprolactone. Examples of the ether-based solvent include dibutyl ether, tetraglyme, diglyme, dimethoxyethane, 2-methyltetrahydrofuran, and tetrahydrofuran. For example, the ketone-based solvent may be cyclohexanone. Examples of the alcohol-based solvent include ethyl alcohol and isopropyl alcohol. Examples of the aprotic solvent include: nitriles such as R-CN, where R is a linear, branched, or cyclic C2 to C20 hydrocarbon group and has a double-bond aromatic ring or ether bond; amides such as dimethylformamide; dioxolanes such as 1,3-dioxolane; and sulfolanes.

The non-aqueous organic solvents may be used alone or more than two kinds thereof in combination. If more than two kinds of the non-aqueous organic solvents are used in combination, a mixed volume ratio may be appropriately adjusted according to the desired performance of the battery to be manufactured and may be obvious to one of ordinary skill in the art.

The lithium salt used in the electrolyte for a lithium secondary battery is dissolved in an organic solvent and acts as a lithium-ion source, thereby enabling basic operation of a lithium secondary battery, and promoting transfer of lithium ions between a positive electrode and a negative electrode. For example, the lithium salt may be at least one supporting electrolytic salt selected from the group consisting of $LiPF_6$, $LiBF_4$, $LiSbF_6$, $LiAsF_6$, $LiN(SO_2C_2F_5)_2$, $Li(CF_3SO_2)_2N$, $LiC_4F_9SO_3$, $LiClO_4$, $LiAlO_2$, $LiAlCl_4$, $LiN(C_xF_{2x+1}SO_2)(C_yF_{2y+1}SO_2)$ where x and y are natural numbers, LiCl, LiI, and $LiB(C_2O_4)_2$ [lithium bis(oxalato) borate; LiBOB]. The concentration of the lithium salt may be in the range of 0.1 to 2.0 M. If the concentration of the lithium salt is within this range, an electrolyte has appropriate levels of conductivity and viscosity and thus exhibits excellent electrolytic performance, and lithium ions may migrate effectively.

According to the type of a lithium secondary battery, the separator 113 may be disposed between the positive electrode 114 and the negative electrode 112. The separator may be a single layer of polyethylene, polypropylene, or polyvinylidene fluoride, or multiple layers of at least two of these materials. Also, the separator may be a mixed multi-layer, such as a polyethylene/polypropylene layer, a polyethylene/polypropylene/polyethylene layer, or a polypropylene/polyethylene/polypropylene layer.

Lithium secondary batteries can be classified as a lithium ion battery, a lithium ion polymer battery, or a lithium polymer battery, according to the separator and the electrolyte; can be classified as a cylindrical battery, a rectangular battery, a coin-type battery, or a pouch-type battery, according to the shape of a battery; and can be classified as a bulk-type battery or a film-type battery, according to the size of the battery. The manufacturing methods of the batteries described above are known in the art and thus, a detailed description thereof will not be provided herein.

One or more embodiments will now be described in further detail with reference to the following examples. These examples are for illustrative purposes only and are not intended to limit the scope of the one or more embodiments.

[Examples]

(Preparation of negative active material)

Example 1: Negative active material with a composition of 68at%Si-16at%Al-16at%Fe alloy

Si, Al, and Fe were mixed at an atom percent (at%) ratio of 68: 16: 16. The mixture was melted in vacuum by using an induction melting furnace to prepare a parent alloy of Si, Al, and Fe. The prepared parent alloy was pulverized into an appropriate size, and the pulverized parent alloy was put in a graphite crucible installed in a melt spinner and then mixed at a temperature ranging from 1400 to 1500°C for 5 minutes while being melted. The melt-mixed parent alloy was quenched to room temperature at a quenching rate of $10^7$ K/sec to prepare an alloy ribbon. The alloy ribbon was pulverized to prepare a negative active material formed of ally powder having an average particle size of 3.2 $\mu$m.

In the negative active material, a 16at%Si-16at%Al-10.67at%Fe alloy is formed as a matrix phase in which an atom percent (at%) ratio of Si to Al to Fe is 3:3:2. In this regard, the remaining atom percent of Fe is 5.33 at% in view of the composition of 68at%Si-16at%Al-16at%Fe. The 5.33at%Fe reacts with Si so as to form a $FeSi_2$ phase with a composition of 5.33at%Fe-10.66at%Si.

Also, in 68at%Si of the composition 68at%Si-16at%Al-16at%Fe, the remaining atom percent of Si obtained by subtracting 16at%Si involved in forming the matrix phase and 10.66at%Si involved in forming the $FeSi_2$ phase is 41.34 at%. Thus, an active 41.34at%Si phase and 42.67 at% of a phase in which an atom percent (at%) ratio of Si to Al to Fe is 3:3:2 from the composition 16 at% Si - 16 at% Al- 10.67 at% Fe are formed.

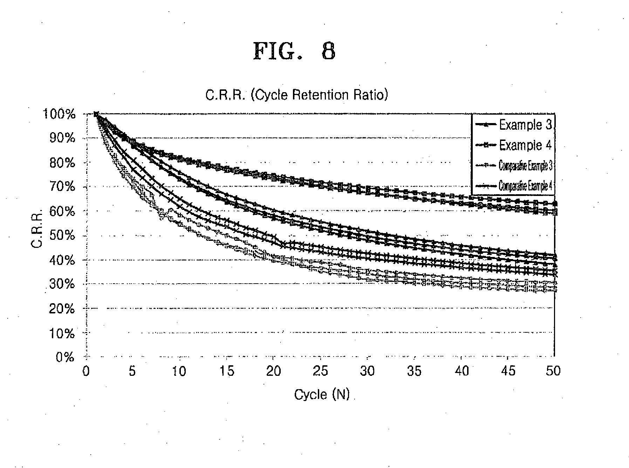

Therefore, in the negative active material, an atom percent ratio of the Si phase to the phase in which an atom percent (at%) ratio of Si to Al to Fe is 3:3:2 is 41.34: 42.67, with a Si ratio of 2.58 (i.e. 41.34:16). The atom percent ratio can be confirmed by comparing capacity results illustrated in FIG. 8, which is a graph showing cycle characteristics of a lithium secondary battery, with an at% rate of the active Si phase included in the negative active material which is related to capacity.

Example 2: Negative active material with a composition of 65at%Si-21at%Al-14at%Fe alloy

A negative active material was prepared in the same manner as in Example 1, except that Si, Al, and Fe were mixed at an atom percent (at%) ratio of 65: 21: 14 instead of mixing Si, Al, and Fe at an atom percent (at%) ratio of 68: 16: 16.

In the negative active material, a 21at%Si-21at%Al-14at%Fe alloy is formed as a matrix phase in which an atom percent (at%) ratio of Si to Al to Fe is 3:3:2.

In 65at%Si of the composition 65at%Si-21at%Al-14at%Fe, the remaining atom percent of Si obtained by subtracting 21at%Si involved in forming the matrix phase is 44 at%. Thus, an active 44at%Si phase and 56 at% of a phase in which an atom percent (at%) ratio of Si to Al to Fe is 3:3:2 from the composition 21 at% Si - 21 at% Al -14 at% Fe are formed.

Therefore, in the negative active material, an atom percent ratio of the Si phase to the phase in which an atom percent (at%) ratio of Si to Al to Fe is 3:3:2 is 44:56, with a Si ratio of 2.10 (i.e. 44:21). The atom percent ratio can be confirmed by comparing capacity results illustrated in FIG. 8, which is a graph showing cycle characteristics of a lithium secondary battery, with a at% rate of the active Si phase included in the negative active material which is related to capacity.

Comparative Example 1: Negative active material with a composition of 68at%Si-16at%Ti-16at%Ni alloy

A negative active material was prepared in the same manner as in Example 1, except that Si, Ti, and Ni were mixed at an atom percent (at%) ratio of 68: 16: 16 instead of mixing Si, Al, and Fe at an atom percent (at%) ratio of 68: 16: 16.

Comparative Example 2: Negative active material with a composition of 60at%Si-12at%Al-28at%Fe alloy

A negative active material was prepared in the same manner as in Example 1, except that Si, Al, and Fe were mixed at an atom percent (at%) ratio of 60: 12: 28 instead of mixing Si, Al, and Fe at an atom percent (at%) ratio of 68: 16: 16.

In the composition of the negative active material, at% of Fe was larger than at% of Fe, and the matrix phase in which an atom percent (at%) ratio of Si to Al to Fe is 3:3:2 was not formed. Meanwhile, 28at%Fe reacted with Si so as to form a $FeSi_2$ phase with a composition of 28at%Fe-56at%Si.

(Manufacturing of lithium secondary battery)

Example 3

The negative active material prepared according to Example 1, polyamide imide, and Ketjen black were mixed at a ratio of 90:8:2 in N-methylpyrrolidone to prepare a negative active material slurry. The negative active material slurry was coated on a Cu current collector having a thickness of 10 $\mu$m by using a doctor blade, the coated Cu current collector was dried in vacuum at 350°C for 1 hour, a negative active material layer having a thickness of 42 $\mu$m was stacked on the Cu current collector, and a hole having a diameter of 16 mm was made therethrough, thereby completing the manufacture of a negative electrode.

The negative electrode, a lithium electrode as a counter electrode, a microporous polypropylene separator (Celgard 3501), and an electrolytic solution including ethylene carbonate (EC), diethyl carbonate (DEC) and fluoroethylene carbonate (FEC) (volume ratio of EC: DEC: FEC was 5:75:25) were assembled in a helium-filled glove box to manufacture a coin-type half cell.

Example 4

A coin-type half cell was manufactured in the same manner as in Example 3, except that the negative active material prepared according to Example 2 was used instead of the negative active material of Example 1.

Comparative Example 3

A coin-type half cell was manufactured in the same manner as in Example 3, except that the negative active material prepared according to Comparative Example 1 was used instead of the negative active material of Example 1.

Comparative Example 4

A coin-type half cell was manufactured in the same manner as in Example 3, except that the negative active material prepared according to Comparative Example 2 was used instead of the negative active material of Example 1.

(Evaluation of negative active material and performance evaluation of lithium secondary battery)

Evaluation Example 1: X-ray diffraction (XRD) measurement

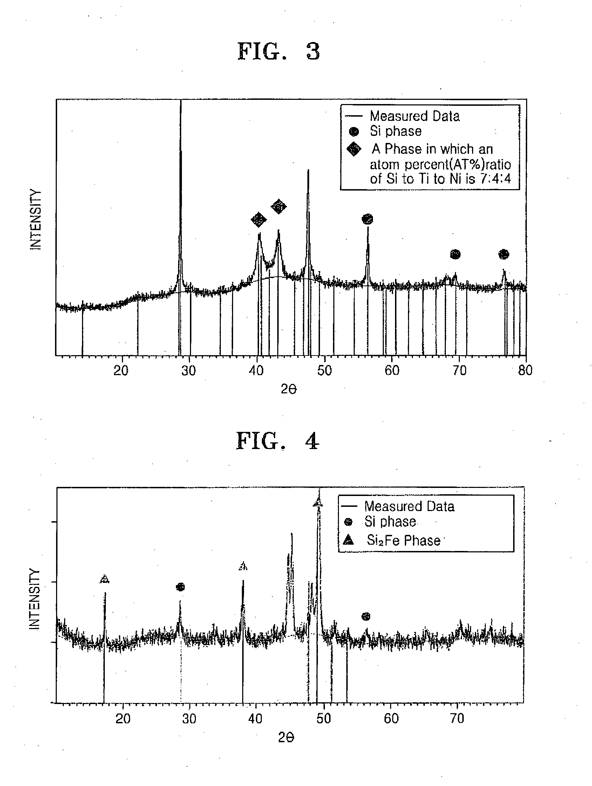

XRD analysis (X'pert PRO MPD, available from PANalytical) was performed on the negative active materials of Examples 1 and 2 and Comparative Examples 1 and 2 and the results are shown in FIGS. 1 through 4. The test conditions were as follows: CuK-alpha characteristic X-ray wavelength of 1.541 Angstroms.

Referring to FIGS. 1 through 4, in the XRD of the negative active materials of Examples 1 and 2, a Si phase and a phase in which an atom percent (at%) ratio of Si to Al to Fe is 3:3:2 were observed. In contrast, in the XRD of the negative active material of Comparative Example 1, a Si phase and a phase in which an atom percent (at%) ratio of Si to Ti to Ni is 7:4:4 were observed. In addition, in the XRD of the negative active material of Comparative Example 2, a Si phase and a $Si_2Fe$ phase were observed, while the phase in which an atom percent (at%) ratio of Si to Al to Fe is 3:3:2 was not observed.

In detail, in the XRD of the negative active materials of Examples 1 and 2 and Comparative Examples 1 and 2, the Si phase was observed at Bragg ($2\theta$) angles of 28.5° and 47.5°. In contrast, the phase in which an atom percent (at%) ratio of Si to Al to Fe is 3:3:2 was observed at a Bragg ($2\theta$) angle ranging from 21.5° to 51.78° only in the XRD of the negative active materials of Examples 1 and 2.

Meanwhile, the phase in which an atom percent (at%) ratio of Si to Ti to Ni is 7:4:4 was observed at a Bragg ($2\theta$) angle ranging from 14° to 79° in the XRD of the negative active material of Comparative Example 1, and the phase in which an atom percent (at%) ratio of Si to Al to Fe is 3:3:2 was not observed in the XRD of the negative active material of Comparative Example 2.

Also, in the XRD of the negative active materials of Examples 1 and 2, a peak with respect to a Si(111) plane was observed at a Bragg ($2\theta$) angle of 28.5°, the full width at half maximum (FWHM) was obtained from the peak, and average particle sizes of the negative active materials of Examples 1 and 2 are obtained by Scherrer's equation of Equation 1 below. The results are shown in Table 1 below.

[Equation 1]

$$t = K\lambda/\beta\cos\theta \text{ (here, K (shape factor) is 0.9, } \lambda\text{(X-ray wavelength) is 1.5406Å, } \beta \text{ is}$$

(here, K (shape factor) is 0.9, $\lambda$(X-ray wavelength) is 1.5406Å, $\beta$ is FWHM, and a Bragg ($\theta$) angle is 14.25°)

<Table 1>

|  | full width at half maximum (FWHM, degree) | Average particle size (nm) |
|---|---|---|
| Example 1 | 0.2128 | 38.5 |
| Example 2 | 0.2204 | 37.2 |

Referring to Table 1, average particle sizes of Si active metal particles of the negative active materials of Examples 1 and 2 are about 38.5 nm and about 37.2 nm, respectively.

In the XRD of the negative active material of Example 1, the $FeSi_2$ phase was observed at Bragg ($2\theta$) angles of 17.5°, 37.8°, and 49.2°.

Evaluation Example 2: Measurement of the particle size distribution of negative active materials

About 0.1g of the negative active material powders of Example 1 and the remaining of an appropriate amount of distilled water were added to 20mL of vial bottle.

The negative active material powders of Example 1 and distilled water in the vial bottle were dispersed using ultrasonic disperser for about 1 minute. A graph of the particle size distribution of the negative active material powders of Example 1 was drawn using LS 13 320 model available from Hitachi. The results are shown in Fig. 5 below. Referring to FIG. 5, the average particle size (D50) of the negative active material powders of Example 1 were about 4 $\mu$m to about 6$\mu$m.

Evaluation Example 3: Measurement of capacity and cycle characteristics

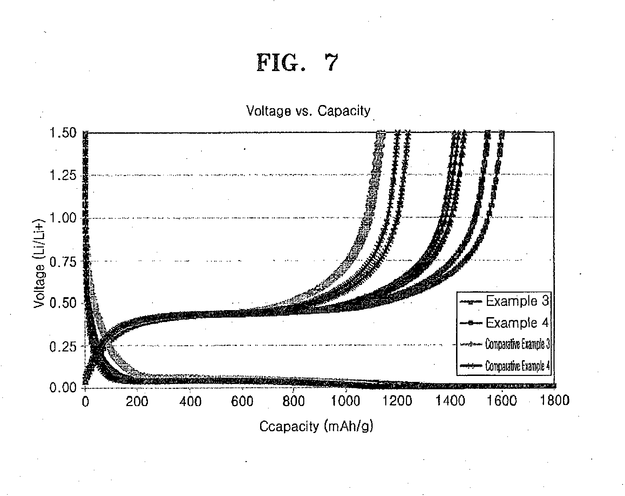

Cell characteristics of the coin-type half cells manufactured according to Examples 3 and 4 and Comparative Examples 3 and 4 were evaluated, and the results are shown in FIGS. 7 and 8 and Table 2 below.

FIG. 7 illustrates results of initial charge/discharge test of the coin-type half cells of Examples 3 and 4 and Comparative Examples 3 and 4 which is performed at a charge/discharge current density of 0.1, a charge cut-off voltage of 10mV(Li/Li$^+$), and a discharge cut-off voltage of 1.5 V(Li/Li$^+$).

FIG. 8 illustrates cycle retention rate calculation results obtained such that charging and discharging processes were repeatedly performed on the coin-type half cells of Examples 3 and 4 and Comparative Examples 3 and 4 as follows: once at 0.1 C, once at 0.2 C, and at 1 C up to 50 cycles, a change in capacity according to each cycle was measured, and cycle retention rate was calculated therefrom. The cycle retention rate (%) is obtained using Equation 2 below.

[Equation 2]

$$\text{Cycle retention rate (\%)} = \text{discharge capacity at } 50^{th} \text{ cycle/discharge capacity at } 1^{st} \text{ cycle} \times 100$$

<Table 2>

| | Discharge capacity at 1st cycle (mAh/g) | Discharge capacity at 50th cycle (mAh/q) | Initial efficiency (%) | Cycle retention rate (%) |
|---|---|---|---|---|
| Example 3 | 1027.03 | 416.97 | 86.5 | 40.6 |
| Example 4 | 1101.11 | 661.77 | 88.3 | 60.1 |
| Comparative Example 3 | 970.78 | 279.58 | 85.1 | 28.8 |
| Comparative Example 4 | 992.21 | 345.29 | 85.5 | 34.8 |

Referring to FIGS. 7 and 8 and Table 2, the lithium secondary batteries of Example 3 and 4 have higher initial discharge capacity, initial efficiency and cycle retention rate than those of the lithium secondary batteries of Comparative Examples 3 and 4.

From the results, it is confirmed that the lithium secondary batteries of Examples 3 and 4, each of which includes a negative electrode including the negative active material that is formed of a Si-Al-Fe alloy and includes a portion where a Si phase and a phase in which an atom percent (at%) ratio of Si to Al to Fe is 3:3:2 are dispersed, have higher initial discharge capacity, initial efficiency and cycle retention rate than those of the lithium secondary battery of Comparative Example 3 including a negative electrode including the negative active material that is formed of the Si-Ti-Ni alloy and includes a portion where a Si phase and a phase in which an atom percent (at%) ratio of Si to Ti to Ni is 7:4:4 are dispersed and those of the lithium secondary battery of Comparative Example 4 including a negative electrode including the negative active material not including the phase in which an atom percent (at%) ratio of Si to Al to Fe is 3:3:2.

Meanwhile, as described in Evaluation Example 1 above, the negative active material of Example 1 included in the lithium secondary battery of Example 3 has the $FeSi_2$ phase that does not react with lithium ions. Thus, it is confirmed that the lithium secondary battery of Example 3 has lower initial discharge capacity, initial efficiency and cycle retention rate than those of the lithium secondary battery of Example 4 including the negative active material not including the $FeSi_2$ phase.

It should be understood that the embodiments described therein should be considered in a descriptive sense only and not for purposes of limitation. Descriptions of features or aspects within each embodiment should typically be considered as available for other similar features or aspects in other embodiments.

**Claims**

1. A negative electrode active material comprising a silicon-metal alloy having the composition xSi-yAl-zFe wherein $50at\% \leq x \leq 90at\%$, $5at\% \leq y \leq 30at\%$, $5at\% \leq z \leq 30at\%$, and x+y+z=100 at%, and y is equal to or greater than z wherein the alloy comprises a Si phase and wherein the alloy comprises a Si-Al-Fe phase, **characterized in that** the alloy comprises a first Si-Al-Fe phase with an at% ratio of 3:3:2, wherein the x-ray diffraction pattern for the first Si-Al-Fe phase has a peak present at a Bragg angle $2\theta$ of $24.6 \pm 0.2$ degrees $2\theta$, $44.7 \pm 0.2$ degrees $2\theta$ or $47.0 \pm 0.2$ degrees $2\theta$.

2. A negative electrode active material according to claim 1, wherein the x-ray diffraction pattern shows peaks at any two or more of $24.6 \pm 0.2$ degrees $2\theta$, $44.7 \pm 0.2$ degrees $2\theta$ and $47.0 \pm 0.2$ degrees $2\theta$.

3. A negative electrode active material according to claim 1, wherein the x-ray diffraction pattern shows peaks at all of $24.6 \pm 0.2$ degrees $2\theta$, $444.7 \pm 0.2$ degrees $2\theta$ and $47.0 \pm 0.2$ degrees $2\theta$.

4. A negative electrode active material according to any of claims 1 to 3 wherein the at% ratio of Si in the first Si-Al-Fe phase to Si in the Si phase is between 1:0.5 and 1:12, optionally between 1:1.0 and 1:10.0, optionally between 1:1.3 and 1:7.5, optionally between 1:1.5 and 1:3.5, optionally between 1:1.75 and 1:3 and optionally between 1:2.0 and 1:2.75.

5. A negative electrode active material according to any of claims 2 to 4 wherein the first Si-Al-Fe phase is a matrix phase.

6. A negative electrode active material according to any of claims 1 to 5 wherein the Si phase comprises particles of Si having average particle size from 10 to 200 nm, optionally from 20 to 150 nm, optionally from 30 to 100 nm, optionally from 35 to 75 nm.

7. A negative electrode active material according to any of claims 1 to 6 wherein x is between $60at\% \leq x \leq 90at\%$, optionally $62at\% \leq x \leq 85at\%$, optionally $64at\% \leq x \leq 80at\%$ and optionally $65at\% \leq x \leq 75at\%$.

8. A negative electrode active material according to any of claims 1 to 7 wherein y is between $5at\% \leq y \leq 25at\%$, optionally $10at\% \leq y \leq 23at\%$, and optionally $15at\% \leq y \leq 22at\%$.

9. A negative electrode active material according to any of claims 1 to 8 wherein z is between $5at\% \leq z \leq 25at\%$, optionally $10at\% \leq z \leq 20at\%$, and optionally $12at\% \leq z \leq 18at\%$.

10. A negative electrode active material according to any of claims 1 to 9 wherein one or more of the elements Si, Al, and Fe are independently doped with at least one transition metal selected from the group consisting of Ni, Co, Cu, Cr, Zr, Ti, Mn, V, and Zn, optionally an atom percent (at%) of the doped transition metal with respect to the whole alloy is independently from 0.1 at% to 5 at%.

11. A negative electrode comprising the negative electrode active material according to any of claims 1 to 10.

12. A battery comprising the negative electrode of claim 11.

13. A process for preparing a negative electrode active material according to any of claims 1 to 10 comprising the steps of:

> melting Si, Al and Fe to prepare a parent alloy,
> quenching the parent alloy to form an alloy ribbon and,

optionally pulverizing the alloy ribbon.

14. A process according to claim 13 wherein the melting step is performed by one of vacuum induction melting (VIM), arc melting, or mechanical alloying.

15. A process according to claim 13 or claim 14 wherein the quenching is performed using a melt spinner or by gas atomization optionally at rate of from $10^3$ K/sec to $10^9$ K/sec.

**Patentansprüche**

1. Negativ aktives Elektrodenmaterial umfassend eine Siliciummetalllegierung, die die Zusammensetzung xSi-yAl-zFe aufweist, wobei 50 at% $\leq$ x $\leq$ 90 at%, 5 at% $\leq$ y $\leq$ 30 at%, 5 at% $\leq$ z $\leq$ 30 at% und x+y+z = 100 at% und y gleich oder höher als z ist, wobei die Legierung eine Si-Phase umfasst und wobei die Legierung eine Si-Al-Fe-Phase umfasst, **dadurch gekennzeichnet, dass**
die Legierung eine erste Si-Al-Fe-Phase mit einem at%-Verhältnis von 3:3:2 umfasst, wobei das Röntgendiffraktionsmuster für die erste Si-Al-Fe-Phase einen Peak aufweist, der bei einem Bragg-Winkel 2$\Theta$ von 24,6 $\pm$ 0,2 Grad 2$\Theta$, 44,7 $\pm$ 0,2 Grad 2$\Theta$ oder 47,0 $\pm$ 0,2 Grad 2$\Theta$ vorliegt.

2. Negativ aktives Elektrodenmaterial nach Anspruch 1, wobei das Röntgendiffraktionsmuster Peaks bei irgendwelchen zwei oder mehr von 24,6 $\pm$ 0,2 Grad 2$\Theta$, 44,7 $\pm$ 0,2 Grad 2$\Theta$ und 47,0 $\pm$ 0,2 Grad 2$\Theta$ aufweist.

3. Negativ aktives Elektrodenmaterial nach Anspruch 1, wobei das Röntgendiffraktionsmuster Peaks bei allen von 24,6 $\pm$ 0,2 Grad 2$\Theta$, 44,7 $\pm$ 0,2 Grad 2$\Theta$ und 47,0 $\pm$ 0,2 Grad 2$\Theta$ aufweist.

4. Negativ aktives Elektrodenmaterial nach einem der Ansprüche 1 bis 3, wobei das at%-Verhältnis von Si in der ersten Si-Al-Fe-Phase zu Si in der Si-Phase zwischen 1:0,5 und 1:12, wahlweise zwischen 1:1,0 und 1:10, wahlweise zwischen 1:1,3 und 1:7,5, wahlweise zwischen 1:1,5 und 1:3,5, wahlweise zwischen 1:1,75 und 1:3 und wahlweise zwischen 1:2,0 und 1:2,75 liegt.

5. Negativ aktives Elektrodenmaterial nach einem der Ansprüche 2 bis 4, wobei die erste Si-Al-Fe-Phase eine Matrixphase ist.

6. Negativ aktives Elektrodenmaterial nach einem der Ansprüche 1 bis 5, wobei die Si-Phase Teilchen von Si umfasst, die eine durchschnittliche Teilchengröße von 10 bis 200 nm, wahlweise von 20 bis 150 nm, wahlweise von 30 bis 100 nm, wahlweise von 35 bis 75 aufweisen.

7. Negativ aktives Elektrodenmaterial nach einem der Ansprüche 1 bis 6, wobei x zwischen 60 at% $\leq$ x $\leq$ 90 at%, wahlweise 62 at% $\leq$ x $\leq$ 85 at%, wahlweise 64 at% $\leq$ x $\leq$ 80 at% und wahlweise 65 at% $\leq$ x $\leq$ 75 at% liegt.

8. Negativ aktives Elektrodenmaterial nach einem der Ansprüche 1 bis 7, wobei y zwischen 5 at% $\leq$ y $\leq$ 25 at%, wahlweise 10 at% $\leq$ y $\leq$ 23 at% und wahlweise 15 at% $\leq$ y $\leq$ 22 at% liegt.

9. Negativ aktives Elektrodenmaterial nach einem der Ansprüche 1 bis 8, wobei z zwischen 5 at% $\leq$ z $\leq$ 25 at%, wahlweise 10 at% $\leq$ z $\leq$ 20 at% und wahlweise 12 at% $\leq$ z $\leq$ 18 at% liegt.

10. Negativ aktives Elektrodenmaterial nach einem der Ansprüche 1 bis 9, wobei eines oder mehrere der Elemente Si, Al und Fe unabhängig mit mindestens einem Übergangsmetall ausgewählt aus der Gruppe bestehend aus Ni, Co, Cu, Cr, Zr, Ti, Mn, V und Zn dotiert werden, wahlweise ein Atomprozent (at%) des dotierten Übergangsmetalls mit Bezug auf die gesamte Legierung unabhängig 0,1 at% bis 5 at% beträgt.

11. Negative Elektrode umfassend das negativ aktive Elektrodenmaterial nach einem der Ansprüche 1 bis 10.

12. Batterie umfassend die negative Elektrode nach Anspruch 11.

13. Verfahren für die Herstellung eines negativ aktiven Elektrodenmaterials nach einem der Ansprüche 1 bis 10, umfassend die Schritte des:

Schmelzens von Si, Al und Fe, um eine Mutterlegierung herzustellen,
Abschreckens der Mutterlegierung, um einen Legierungsstreifen zu bilden, und
wahlweise Pulverisierens des Legierungsstreifens.

14. Verfahren nach Anspruch 13, wobei der Schmelzschritt durch eines von Vakuuminduktionsschmelzen (VIM), Lichtbogenschmelzen oder mechanischem Legieren ausgeführt wird.

15. Verfahren nach Anspruch 13 oder 14, wobei das Abschrecken unter Anwendung einer Schmelzschleudervorrichtung oder durch Gasatomisierung, wahlweise mit einer Rate von $10^3$ K/sec bis $10^9$ K/sec ausgeführt wird.

**Revendications**

1. Matériau actif d'électrode négative comprenant un alliage silicium-métal ayant pour composition xSi-yAl-zFe, où 50 at% $\leq$ x $\leq$ 90 at%, 5 at% $\leq$ y $\leq$ 30 at%, 5 at% $\leq$ z $\leq$ 30 at% et x+y+z = 100 at%, et y étant supérieur ou égal à z, l'alliage comprenant une phase Si et l'alliage comprenant une phase Si-Al-Fe, **caractérisé en ce que** l'alliage comprend une première phase Si-Al-Fe avec un rapport en pourcentage atomique (at%) de 3:3:2, le schéma de diffraction des rayons x pour la première phase Si-Al-Fe présentant un pic à un angle de Bragg 2θ de 24,6 $\pm$ 0,2 degré 2θ, 44,7 $\pm$ 0,2 degré 2θ ou 47,0 $\pm$ 0,2 degré 2θ.

2. Matériau actif d'électrode négative selon la revendication 1, le schéma de diffraction des rayons x présentant des pics à deux quelconques de ces angles, ou plus de deux quelconques de ces angles : 24,6 $\pm$ 0,2 degré 2θ, 44,7 $\pm$ 0,2 degré 2θ et 47,0 $\pm$ 0,2 degré 2θ.

3. Matériau actif d'électrode négative selon la revendication 1, le schéma de diffraction des rayons x présentant des pics à tous ces angles : 24,6 $\pm$ 0,2 degré 2θ, 44,7 $\pm$ 0,2 degré 2θ et 47,0 $\pm$ 0,2 degré 2θ.

4. Matériau actif d'électrode négative selon l'une quelconque des revendications 1 à 3, le rapport en pourcentage atomique du Si dans la première phase Si-Al-Fe au Si dans la phase Si étant compris entre 1:0,5 et 1:12, facultativement entre 1:1,0 et 1:10,0, facultativement entre 1:1,3 et 1:7,5, facultativement entre 1:1,5 et 1:3,5, facultativement entre 1:1,75 et 1:3 et facultativement entre 1:2,0 et 1:2,75.

5. Matériau actif d'électrode négative selon l'une quelconque des revendications 2 à 4, la première phase Si-Al-Fe étant une phase de matrice.

6. Matériau actif d'électrode négative selon l'une quelconque des revendications 1 à 5, la phase Si comprenant des particules de Si d'une granulométrie moyenne allant de 10 nm à 200 nm, facultativement de 20 nm à 150 nm, facultativement de 30 nm à 100 nm, facultativement de 35 nm à 75 nm.

7. Matériau actif d'électrode négative selon l'une quelconque des revendications 1 à 6, x satisfaisant 60 at% $\leq$ x $\leq$ 90 at%, facultativement 62 at% $\leq$ x $\leq$ 85 at%, facultativement 64 at% $\leq$ x $\leq$ 80 at% et, facultativement, 65 at% $\leq$ x $\leq$ 75 at%.

8. Matériau actif d'électrode négative selon l'une quelconque des revendications 1 à 7, y satisfaisant 5 at% $\leq$ y $\leq$ 25 at%, facultativement 10 at% $\leq$ y $\leq$ 23 at% et, facultativement, 15 at% $\leq$ y $\leq$ 22 at%.

9. Matériau actif d'électrode négative selon l'une quelconque des revendications 1 à 8, z satisfaisant 5 at% $\leq$ z $\leq$ 25 at%, facultativement 10 at% $\leq$ z $\leq$ 20 at% et, facultativement, 12 at% $\leq$ z $\leq$ 18 at%.

10. Matériau actif d'électrode négative selon l'une quelconque des revendications 1 à 9, un ou plusieurs des éléments Si, Al et Fe étant dopés de manière indépendante avec au moins un métal de transition choisi dans le groupe comprenant Ni, Co, Cu, Cr, Zr, Ti, Mn, V et Zn, facultativement un pourcentage atomique (at%) du métal de transition dopé par rapport à l'ensemble de l'alliage allant, de manière indépendante, de 0,1 at% à 5 at%.

11. Électrode négative comprenant le matériau actif d'électrode négative selon l'une quelconque des revendications 1 à 10.

12. Batterie comprenant l'électrode négative selon la revendication 11.

**13.** Procédé de préparation d'un matériau actif d'électrode négative selon l'une quelconque des revendications 1 à 10, comprenant les étapes de :

> fusion de Si, Al et Fe pour préparer un alliage mère,
> trempe de l'alliage mère pour former un ruban d'alliage et,
> facultativement, pulvérisation du ruban d'alliage.

**14.** Procédé selon la revendication 13, l'étape de fusion étant réalisée par fusion par induction sous vide (FIV), par fusion à l'arc ou par alliage mécanique.

**15.** Procédé selon la revendication 13 ou la revendication 14, la trempe étant réalisée au moyen d'un dispositif de trempe rapide sur disque rotatif ou par pulvérisation de gaz, facultativement à une vitesse allant d'environ $10^3$ K/sec à environ $10^9$ K/sec.

EP 2 624 340 B1

FIG. 1

FIG. 2

## FIG. 3

## FIG. 4

# FIG. 5

**Particle Size Distribution**

# FIG. 6

# FIG. 7

Voltage vs. Capacity

# FIG. 8

C.R.R. (Cycle Retention Ratio)

**EP 2 624 340 B1**

**Patent documents cited in the description**

- US 20070128517 A
- US 20050031957 A
- US 20030134198 A